# EUROPEAN PATENT SPECIFICATION

(11) **EP 3 362 355 B1**
(45) Date of publication and mention of the grant of the patent: **20.05.2020**
(21) Application number: 16788241.4
(22) Date of filing: 13.10.2016
(51) Int. Cl.: B64C 1/06, B64C 1/12

(54) **STRINGER-LESS FUSELAGE STRUCTURE AND METHOD OF MANUFACTURE**
HOLMLOSE RUMPFSTRUKTUR UND VERFAHREN ZUR HERSTELLUNG
STRUCTURE DE FUSELAGE SANS LISSE ET PROCÉDÉ DE FABRICATION

(30) Priority: 16.10.2015 US 201562242495 P
(43) Date of publication of application: 22.08.2018
(73) Proprietor: Bombardier Inc., Dorval, Québec H4S 1Y9 (CA); Short Brothers Plc, Belfast BT3 9DZ (GB)
(72) Inventor: MAROUZE, Jean-Philippe, Montreal, Québec H3W 2M1 (CA)
(74) Representative: Holmes, Matthew William
(86) International application number: PCT/IB2016/056142
(87) International publication number: WO 2017/064646

(56) References cited:
- US-A1- 2004 155 148
- US-A1- 2011 268 926
- US-A1- 2012 001 023
- US-A1- 2012 043 009
- US-B1- 8 985 512

## Description

### CROSS-REFERENCE TO RELATED APPLICATION(S)

This International PCT Patent Application relies for priority on U.S. Provisional Patent Application Serial No. 62/242,495, filed on October 16, 2015.

### TECHNICAL FIELD

The disclosure relates generally to aircraft fuselage structures, and more particularly to aircraft fuselage structures with skins made of composite materials.

### BACKGROUND OF THE ART

Composite materials including those known as advanced polymer matrix composites have properties that render these materials attractive for use in structural parts of aircraft. Aircraft structural parts incorporating composite materials must demonstrate comparable performance to traditional (i.e., metallic) counterparts in order to achieve certification. Traditionally, fuselage structure constructions including metallic skins, stringers and frames have been used to provide the required structural performance for such traditional fuselage structure constructions. However, due to the different properties of composite materials in comparison with metallic materials, traditional fuselage construction techniques tailored for fuselage structures having metallic skins are not necessarily optimized for fuselage structures having skins made of composite materials.

US8,985,512, US2004/155,148 and US2012/043009 disclose fuselage structures made of composite materials and the construction thereof.

### SUMMARY

In one aspect, the invention concerns a stringer-less structure as claimed in claim 1.

The composite fuselage skin may be closed in its circumferential direction.

The composite fuselage skin may have a non-cylindrical shape.

The composite fuselage skin may be tapered along its longitudinal axis.

The composite fuselage skin may have a conical shape.

The plurality of frames may be part of a stringer-less frame subassembly.

The stringer-less fuselage structure may be an aft fuselage section of an aircraft.

The fuselage structure may comprise an aircraft engine mount extending through the composite fuselage skin and fastened to one or more of the frames.

The frames may be made of a metallic material.

In an embodiment, a thickness of the composite fuselage skin at one of the tear straps may be at least 10% greater than a thickness of the composite fuselage skin between two of the tear straps.

In an embodiment, one or more of the frames may comprise one or more recesses to accommodate the increased thickness of one or more of the tear straps.

In another aspect, the disclosure describes an aircraft comprising a stringer-less fuselage structure as described herein.

In another aspect, the invention concerns a method for manufacturing a stringer-less fuselage structure as claimed in claim 10.

The composite fuselage skin may be closed in the circumferential direction and the assembling may comprise inserting the stringer-less subassembly of frames into the composite fuselage skin.

The composite fuselage skin may be closed in the circumferential direction and the assembling may comprise placing the composite fuselage skin over the stringer-less subassembly of frames.

The composite fuselage skin may have a non-cylindrical shape.

The composite fuselage skin may be tapered along its longitudinal axis.

The composite fuselage skin may have a conical shape.

The stringer-less fuselage structure may be an aft fuselage section of an aircraft.

The method may comprise fastening an aircraft engine mount extending through the composite fuselage skin to one or more of the frames.

In another aspect, the disclosure describes an aft fuselage section of an aircraft, the aft fuselage section comprising:
a composite aft fuselage skin including a plurality of longitudinal tear straps formed in the composite aft fuselage skin, the composite aft fuselage skin being tapered along its longitudinal axis; and
a plurality of frames supporting an interior of the composite aft fuselage skin.

The frames may be spaced apart along the longitudinal axis of the composite aft fuselage skin.

The aft composite fuselage skin may be closed in its circumferential direction.

The frames may be made of a metallic material.

The tear straps may each comprise a region of the composite aft fuselage skin having an increased thickness.

In an embodiment, one or more of the frames may comprise one or more recesses to accommodate the increased thickness of one or more of the tear straps.

In a further aspect, the disclosure describes an aircraft comprising an aft fuselage section as disclosed herein.

Further details of these and other aspects of the subject matter of this application will be apparent from the detailed description and drawings included below.

### DESCRIPTION OF THE DRAWINGS

Reference is now made to the accompanying drawings, in which:
FIG. 1 is a top plan view of an exemplary aircraft comprising a fuselage structure as disclosed herein;
FIG. 2A is a perspective exploded view of an exemplary fuselage structure of the aircraft of FIG. 1;
FIG. 2B is a perspective assembled cutaway view of the fuselage structure of FIG. 2A;
FIG. 3 is a detailed view of area A in FIG. 2B showing an interface between a frame and a composite skin of the fuselage structure of FIGS. 2A and 2B;
FIG. 4 is a schematic representation of layers of reinforcement fibers deposited onto a mould in order to form a composite skin of the fuselage structure of FIGS. 2A and 2B having a tear strap;
FIG. 5 is a flowchart illustrating a method for manufacturing the fuselage structure of FIGS. 2A and 2B; and
FIG. 6 is a perspective view of the inside of a partial fuselage structure according to the prior art.

### DETAILED DESCRIPTION

This disclosure relates to composite aircraft structures and more particularly to aircraft fuselage structures with skins made of composite materials. For the purpose of the present disclosure, the term "composite material" is intended to encompass fiber-reinforced composite materials (e.g., polymers) and advanced composite materials also known as advanced polymer matrix composites which generally comprise high strength fibers bound together by a matrix material or any known or other composite material(s) suitable for use in aircraft structural parts such as fuselage skins. For example, such composite materials may include fiber reinforcement materials such as carbon, aramid and/or glass fibers embedded into a thermosetting or thermoplastic matrix material.

In various aspects, the present disclosure describes an aircraft fuselage structure comprising a composite fuselage skin including a plurality of tear straps integrally formed (e.g., embedded) therein and a plurality of (e.g., metallic) frames supporting an interior of the composite fuselage skin. In some embodiments, the fuselage structures disclosed herein may not require traditional stringers in order to achieve the required structural performance. Accordingly, in some embodiments, the fuselage structures disclosed herein may result in a reduced part count and/or reduced weight. In some embodiments, the fuselage structures disclosed herein may require relatively simplified and/or cost-reducing manufacturing methods in comparison with those required for traditional fuselage structures.

Aspects of various embodiments are described through reference to the drawings. Even though the following disclosure is mainly directed toward aircraft fuselage structures, it is understood that aspects of the disclosure may be equally applicable to other aircraft structures and other applications including transport (e.g., trains, busses, ships, watercraft) and automotive.

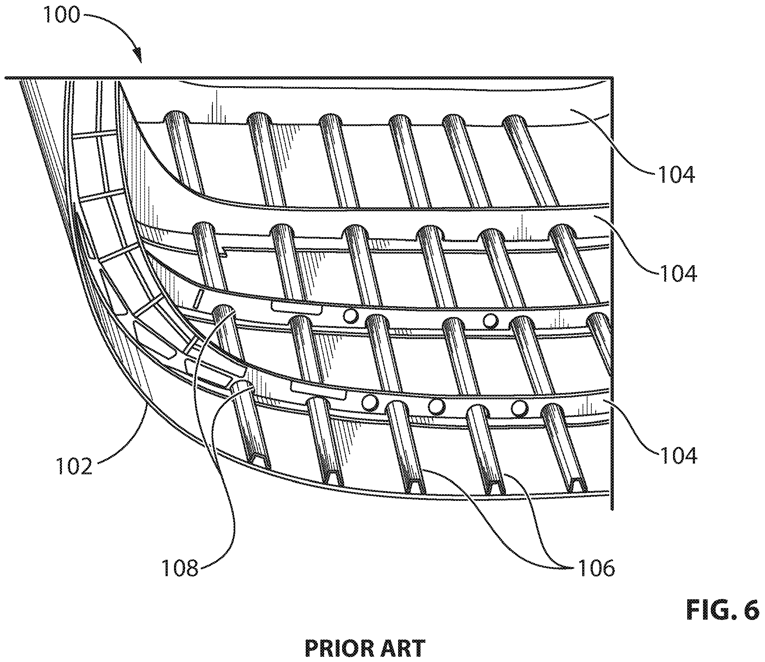

FIG. 6 is a perspective view of the inside of part of a traditional fuselage structure 100 according to the prior art for the purpose of comparison with fuselage structures of the present disclosure described further below. Fuselage structure 100 comprises a metallic (e.g., aluminum) skin 102 internally supported by transverse metallic frames 104 and longitudinal stringers 106. Frames 104 and stringers 106 are fastened to aluminum skin 102 and provide support for the aerodynamic and/or pressurization loads acting on metallic skin 102. Traditional stringers 106 are typically fastened to the inside of metallic skin 102 by riveting or by bonding with adhesive(s). Stringers 106 typically extend in the direction of the length of fuselage structure 100 and are typically spaced apart and distributed about the inside surface of metallic skin 102 to carry a portion of the fuselage bending moment through axial loading of stringers 106. Stringers 106 can also provide support to prevent buckling of metallic skin 102 for example through the bending resistance of stringers 106. Accordingly, stringers 106 have a cross-sectional shape having a substantial height to provide a sufficient moment of inertia to help withstand bending loads. Traditional stringers 106 can also provide some damage tolerance (i.e., resistance to fatigue crack growth) in metallic skin 102 and increase the stiffness of metallic skin 102. Stringers 106 typically extend through transverse frames 104 via mouse holes 108 which are cut-outs through frames 104 and which can serve as locations in frames 104 where stress is concentrated (i.e., stress risers).

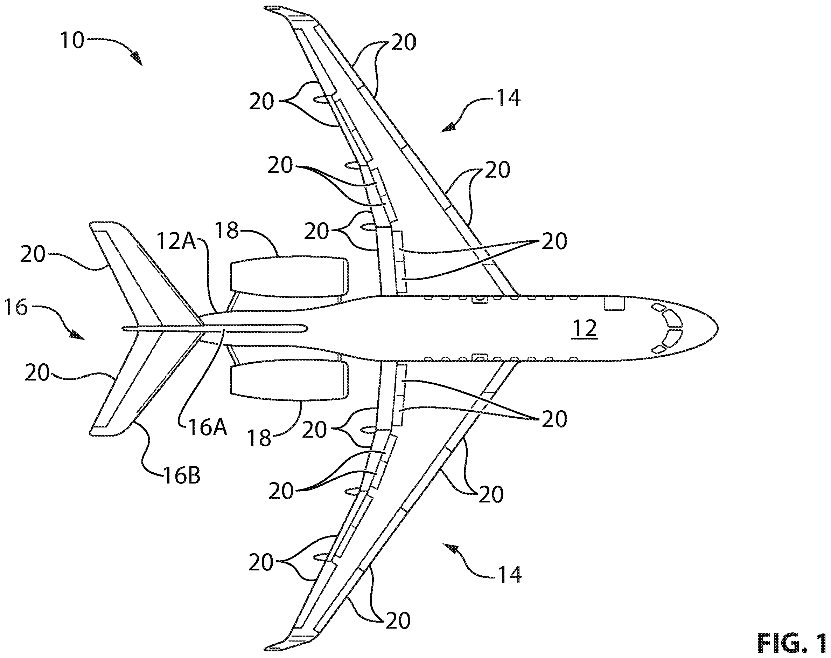

FIG. 1 shows a top plan view of an exemplary aircraft 10 comprising a fuselage structure as described herein. Aircraft 10 may be a fixed-wing aircraft. Aircraft 10 may be a corporate, private, commercial or any other type of aircraft. For example, aircraft 10 may be a narrow-body, twin engine jet airliner. Aircraft 10 may comprise fuselage 12, one or more wings 14, empennage 16. Empennage 16 may comprise vertical stabilizer 16A and horizontal stabilizer 16B. One or more engines 18 may be mounted to fuselage 12 and/or to wing(s) 14. In some embodiments, one or more engines 18 may be mounted to an aft section 12A of fuselage 12. Aircraft 10 may comprise one or more actuatable (e.g., adjustable) flight control surfaces 20 in order to permit control of the movement of aircraft 10 during flight.

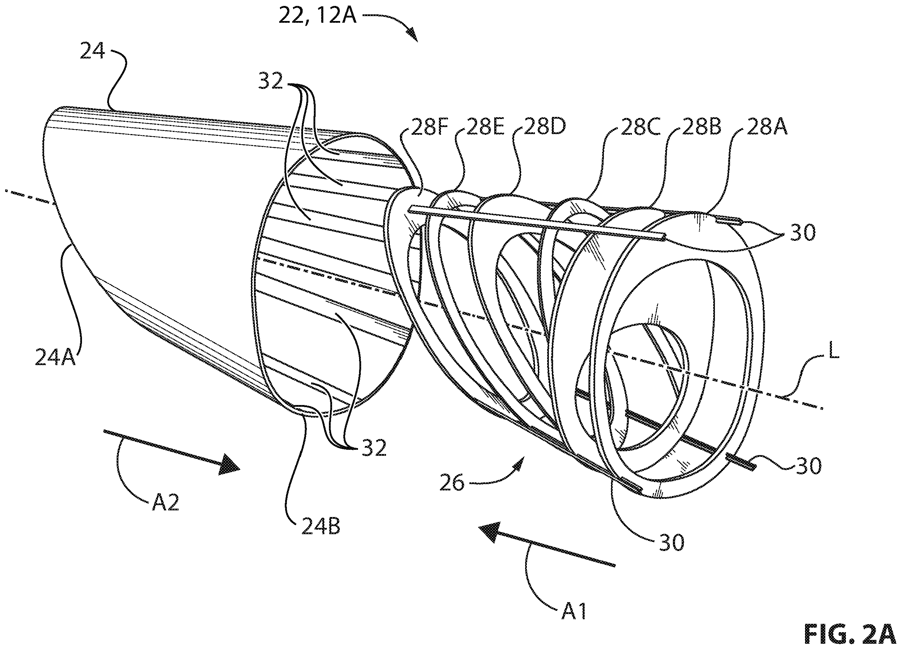

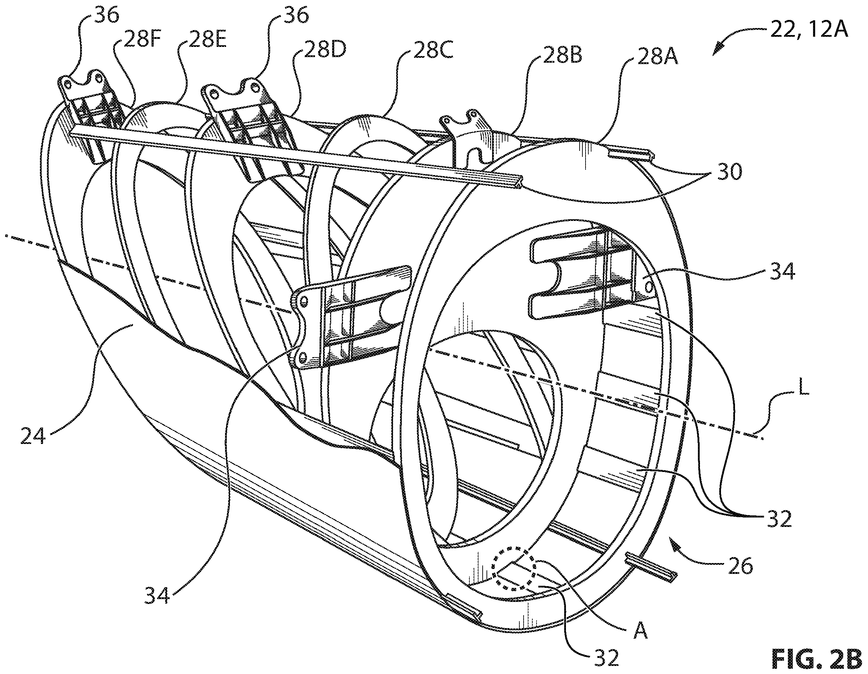

FIG. 2A shows a perspective exploded view of an exemplary fuselage structure 22 in accordance with the present disclosure. In some embodiments, fuselage structure 22 may be an aft fuselage section 12A of aircraft 10 as illustrated in FIG. 2 as a non-limiting example. However, it is understood that aspects of the present disclosure could also be applied to other portions of fuselage 12 such as a cockpit section of fuselage 12 for example. In various embodiments, fuselage structure 22 may be a pressurized or non-pressurized section of fuselage 12. In some embodiments, fuselage structure 22 may be stringer-less, meaning that stringers 106 of the type shown in FIG. 6 may not be required in fuselage structure 22 during use on aircraft 10. Nevertheless, in some examples (not forming part of the claimed invention), one or more stringers could potentially be integrated into fuselage structure 22 if desired or required.

Fuselage structure 22 may comprise composite fuselage skin 24 made of a (e.g., fiber-reinforced) composite material and frame subassembly 26 comprising a plurality of frames 28A-28F (referred generically as "frames 28"). In various embodiments, frames 28 may be made of a metallic material such as an aluminum-based alloy, a titanium-based alloy, steel or other suitable metallic material. Frames 28 may be interconnected via one or more intercostals 30 to form a pre-assembled unitary subassembly 26 where the relative spacing and orientations of frames 28 may be set prior to assembly with composite skin 24. Frames 28 may serve to provide support to an interior of composite skin 24 and may be spaced apart along longitudinal axis L of the composite skin 24. In various embodiments, one or more of frames 28 may be substantially planar and oriented transversely to longitudinal axis L. For example, one or more frames 28 (e.g., frames 28A and 28B) may be substantially perpendicular to longitudinal axis L. Alternatively or in addition, one of more frames 28 (e.g., frames 28C-28F) may be oblique relative to longitudinal axis L.

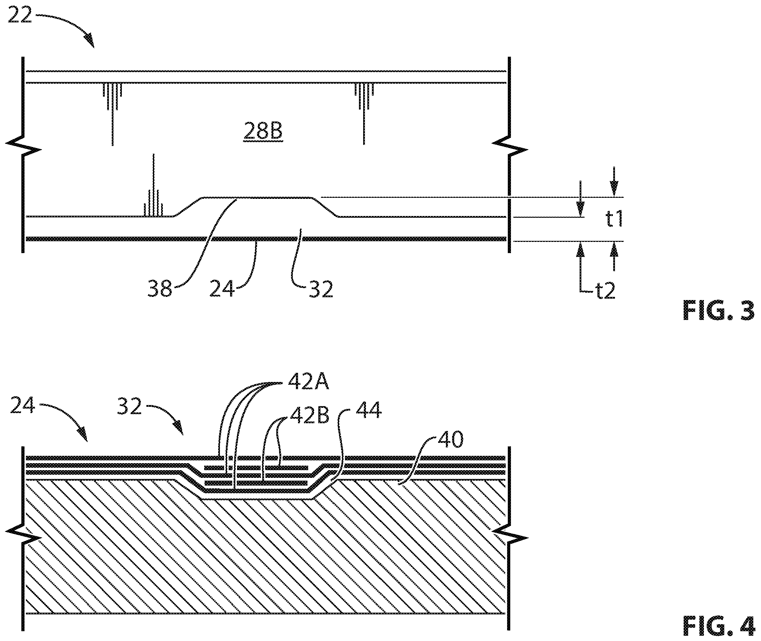

Composite skin 24 may comprise one or more tear straps 32 formed in (i.e., integral to) composite skin 24. Each tear strap 32 may comprise a region of composite skin 24 having an increased thickness as explained further below in reference to FIGS. 3 and 4. Tear straps 32 may extend generally (i.e., for the most part) along longitudinal axis L of composite skin 24 and fuselage structure 22 and may be spaced apart from each other and distributed circumferentially about composite skin 24. Tear straps 32 may not necessarily be parallel to longitudinal axis L but may extend (e.g., linearly or otherwise) between a first point of composite skin 24 having a first longitudinal position and a second point of the composite skin 24 having a second longitudinal position that is different from the first longitudinal position. In some embodiments, one or more tear straps 32 may extend completely or partially between first end 24A and second end 24B of composite skin 24.

Composite skin 24 may have a "full barrel" construction, meaning that composite skin 24 may comprise a single piece that is closed in its circumferential direction and that extends completely around longitudinal axis L. For example, composite skin 24 may be manufactured using any suitable composite manufacturing process of known or other types permitting composite skin 24 to be produced as a full barrel construction. For example, depending on the specific configuration of composite skin 24, a known or other automated fiber placement (AFP) process or automated tape laying (ATL) process may be used to produce composite skin 24 with integrated tear straps 32. ATL and AFP are processes that use computer-guided robotics to lay one or several layers of carbon fiber tape or tows onto a mould or mandrel to form a part or structure. ATL and AFP processes may use tapes or tows of thermoset or thermoplastic preimpregnated materials to form composite layups.

Depending on the section of fuselage 12 fuselage assembly 22 may be part of, fuselage assembly 22 and hence composite skin 24 may have a non-cylindrical shape. For example, in the case where fuselage assembly 22 is an aft-fuselage section 12A of aircraft 10, composite skin 24 may be tapered in a rearward direction along longitudinal axis L so that, for example, a diameter (or circumference/perimeter) of first end 24A of composite skin 24 toward aft portion of aircraft 10 may be smaller than a diameter (or circumference/perimeter) of second end 24B of composite skin 24 toward a forward portion of aircraft 10. In some embodiments, composite skin 24 may, for example, have a generally conical overall shape (e.g., truncated cone). Composite skin 24 may have a circular or non-circular cross-sectional shape taken normal to longitudinal axis L.

FIG. 2B is a perspective assembled view of fuselage structure 22 of FIG. 2A with a portion of skin 24 that has been cut away. FIGS. 2A and FIG. 2B together illustrate a method for assembling composite skin 24 together with subassembly 26 of frames 28. In some embodiments where composite skin 24 is closed in its circumferential direction and is tapered along its longitudinal axis L, the assembly of composite skin 24 and subassembly 26 may comprise inserting the stringer-less subassembly 26 of frames 28 into composite skin 24 by movement of subassembly 26 along arrow A1 (see FIG. 2A) in order to insert subassembly 26 into composite skin 24 via second end 24B (see FIG. 2A) of composite skin 24. Alternatively or in addition, the assembly of composite skin 24 and subassembly 26 may comprise placing (e.g., sliding) composite skin 24 over the stringer-less subassembly 26 of frames 28 by movement of composite skin 24 along arrow A2 (see FIG. 2A). After the assembly of composite skin 24 with subassembly 26 of frames 28 as illustrated in FIG. 2B, composite skin 24 and stringer-less subassembly 26 of frames 28 may be fastened together according to known or other methods using bolts, screws, rivets, adhesive(s), blind fasteners, fasteners sold under the trade name HI-LITE and/or other suitable fastening means (not shown). In some embodiments, drilling and fastening of composite skin 24 and stringer-less subassembly 26 of frames 28 may be conducted from the exterior of fuselage structure 22.

After the assembly of composite skin 24 and subassembly 26, one or more engine mounts 34 may then be added to fuselage structure 22. For example, apertures to permit engine mounts 34 to extend through composite skin 24 may need to be formed through composite skin 24 either during the forming of composite skin 24 or subsequently by cutting, for example. Engine mounts 34 may then be inserted through such apertures of composite skin 24 and fastened to one or more of the frames 28 (e.g., frame 28B) using known or other suitable fastening means. One or more other mounts 36 may similarly be added to fuselage structure 22 and fastened to frames 28D and 28F for example. Other mounts 36 may serve to secure vertical stabilizer 16A of empennage 16 to fuselage structure 22.

The method of manufacturing illustrated in FIGS. 2B may be significantly simplified in comparison with traditional methods that include the installation of frames and stringers required for traditional fuselage structures as illustrated in FIG. 6. For example, in some embodiments, fuselage structure 22 may comprise a reduced number of parts and also reduced weight in comparison with some traditional fuselage structures 22 due partially to the lack of traditional stringers. The approach disclosed herein also facilitates the assembly and fastening of composite skin 24 and frames 28 especially in the case of smaller aircraft such as business jets where space/access inside of fuselage structure 22 is limited. For example, in some embodiments, the fastening of composite skin 24 and subassembly 26 of frames 28 may be achieved using blind fasteners installed from an exterior of composite skin 24 so that the need for assembly personnel to access the interior of fuselage structure 22 may be reduced or eliminated.

FIG. 3 is a detailed view of area A in FIG. 2B showing an interface between frame 28B and composite skin 24 of fuselage structure 22. As mentioned above, tear straps 32 may each comprise a region of composite skin 24 having an increased thickness in comparison with another region of composite skin 24. In reference to FIG. 3, thickness t1 at a location of tear strap 32 may be greater than thickness t2 at a location of composite skin 24 that does not comprise tear strap 32 (e.g., between two tear straps 32). In some embodiments, thickness t1 may be about double thickness t2. In some embodiments, thickness t1 may be about 10%, about 20%, about 30%, about 40%, about 50%, about 60%, about 70%, about 80%, about 90% or about 100% greater than thickness t2. In some embodiments, thickness t1 may be more than double thickness t2. The specific configuration and density or spacing of tear straps 32 in composite skin 24 may be selected based on structural and/or damage tolerance analysis and may be different for different applications.

In some embodiments, one or more of frames 28 may comprises one or more recesses 38 distributed around frames 28 and configured to accommodate the passage of one or more tear straps 32 therethrough. However, unlike mouse holes 108 shown in FIG. 6, recesses may be relatively shallow due to the relatively smaller thickness (i.e., height) of tear straps 32 in comparison with traditional stringers 106. Accordingly, the stress concentration associated with a recess 38 in frame 28 may be significantly lower than a stress concentration associated with a traditional mouse hole 108 in a traditional frame 104 due to the elimination of stringers 106 from fuselage structure 22. In some embodiments, recesses 38 may be configured to contact the inside of composite skin 24 at the locations of tear straps 32 and also at locations between tear straps 32. For example, in some embodiments, a substantially continuous (e.g., uninterrupted) or intermittent (e.g., interrupted) contact interface extending around frame 28B and about longitudinal axis L may be provided between frame 28 and composite skin 24.

In various embodiments, fuselage structure 22 as described herein may be stringer-less so that the need for traditional stringers 106 of FIG. 6 may be eliminated. Even though tear straps 32 have been incorporated into fuselage structure 22 instead of stringers 106, tears straps 32 are not necessarily functionally equivalent to traditional stringers 106. For example, tear straps 32 may provide damage tolerance and also contribute to the stiffness of composite skin 24, however, tear straps 32 may not necessarily be as effective as traditional stringers 106 for providing resistance to buckling of composite skin 24. Depending on the configuration of tear straps 32, this may be due partially to the relatively smaller thickness (i.e., height) of tear straps 32 in comparison with that of traditional stringers 106 and consequently to the relatively lower associated moment of inertia of tear straps 32 contributing to bending resistance. Accordingly, other means for increasing the resistance to buckling of composite skin 24 may be desirable in some situations depending on factors such as, for example, the material of composite skin 24, the diameter and thickness of composite skin 24, the size and number of tear straps 32 and the loads acting on composite skin 24. For example, in some situations, it may be appropriate to select a number and spacing of frames 28 in fuselage structure 22 that provides the additional resistance to buckling desired in view of the lack of stringers in fuselage structure 22. For example, the number of frames 28 may be selected based on a predetermined allowable length/span (e.g., column length) of unsupported portions of composite skin 24. For example, in some embodiments, fuselage structure 22 may comprise primary frames 28A, 28B, 28D and 28F for transferring loads between fuselage structure 22 and other components of aircraft 10, and, secondary frames 28C and 28E serving mainly to provide additional support for composite skin 24 and thereby provide some resistance to buckling of composite skin 24.

FIG. 4 is a schematic representation of a portion of composite skin 24 including an exemplary tear strap 32 being formed using mould/mandrel 40 (e.g., mandrel) via AFP, ATL or other suitable composite manufacturing process(es). The incorporation of tear straps 32 instead of traditional stringers in fuselage structure 22 may permit skin 24 to be formed as a single-piece "full barrel" construction as opposed to circumferential sections (e.g., two half-shells) because the amount of space required to access the interior of fuselage structure 22 for manually installing traditional stringers may not be required. Accordingly, the full barrel construction may be used even for producing skins 24 of smaller fuselage structures 22 and may provide manufacturing advantages. For example, producing composite skin 24 having a full barrel construction with an AFP machine may reduce or eliminate the cutting of tape or tows.

In reference to FIG. 4, layers 42A, 42B of carbon fiber tape or tows, for example, may be deposited onto mould/mandrel 40 in order to produce composite skin 24 having a full barrel configuration. Mould/mandrel 40 may comprise one or more cavities 44 into which one or more tear straps 32 may be formed. For example, tear straps 32 may be formed to extend radially inwardly from composite skin 24. The increased thickness of tear straps 32 may be produced by laying more layers 42A, 42B of tape or tows in the regions of tear straps 32 in order to build up the thickness of composite skin 24 in those regions. In some embodiments, the increased thickness of tear straps 32 may be produced by depositing partial layers 42B between full layers 42A. The orientation of the fibers in the deposited layers 42A, 42B may be selected based on the loads carried by fuselage skin 24 and also based on the damage tolerance behavior that may be desired from tear straps 32. For example, partial layers 42B in the region of tear straps 32 may be deposited so that the majority of the reinforcement fibers are oriented generally along the longitudinal axis L (i.e., 0 degrees). In some embodiments, partial layers 42B may be deposited so that about 60% of the reinforcement fibers are oriented in the 0 degrees direction while the remaining reinforcement fibers in the partial layers 42B are oriented in other directions (e.g., 45 degrees, -45 degrees and 90 degrees) depending on the desired mechanical properties of tear straps 32. Accordingly, tear straps 32 may be embedded within the laminate structure of composite skin 24 and provide longitudinal stiffening elements.

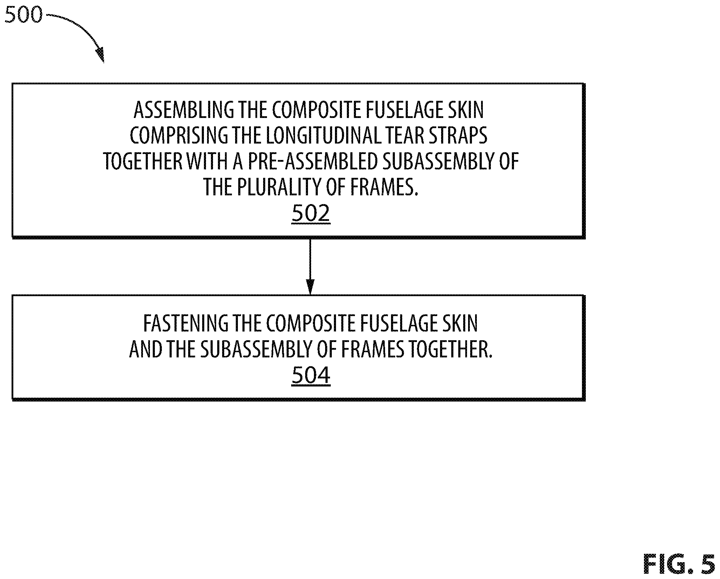

FIG. 5 is a flowchart illustrating a method 500 for manufacturing fuselage structure 22. In reference to FIGS. 2A and 2B, method 500 may be used in the manufacturing of stringer-less fuselage structure 22 comprising composite (fuselage) skin 24 including a plurality of longitudinal tear straps 32 formed therein, and, a plurality of frames 28 configured to support an interior of composite skin 24. Method 500 described below may be combined with steps or elements previously described above. In some embodiments, method 500 may comprise: assembling composite skin 24 comprising longitudinal tear straps 32 together with stringer-less subassembly 26 of the plurality of frames 28 (see block 502); and fastening composite skin 24 and stringer-less subassembly 26 of frames 28 together.

In some embodiments, composite skin 24 may be closed in the circumferential direction and the assembling may comprise inserting stringer-less subassembly 26 of frames 28 into composite skin 24 (see arrow A1 in FIG. 2A). Alternatively or in addition, the assembling may comprises placing (e.g., sliding) composite skin 24 over stringer-less subassembly 26 of frames 28 (see arrow A2 in FIG. 2A).

Method 500 may also comprise fastening an aircraft engine or other type of mounts 34, 36 extending through composite skin 24 to one or more of frames 28 as explained above.

Also as explained above, the fastening of composite skin 24 to subassembly 26 may be carried out from outside of fuselage structure 22 without having to access the interior of fuselage structure 22.

The scope of the claims should not be limited by the preferred embodiments set forth in the examples, but should be given the broadest interpretation consistent with the description as a whole.

## Claims

1. A stringer-less fuselage structure (22) comprising:
a composite fuselage skin (24) including a plurality of tear straps (32) formed in the composite fuselage skin, each tear strap (32) extending generally along a longitudinal axis (L) of the composite fuselage skin (24); and
a plurality of frames (28) supporting an interior surface of the composite fuselage skin (24), the frames (28) being spaced apart along the longitudinal axis (L) of the composite fuselage skin;
**characterised in that** each tear strap (32) comprises a region of the composite fuselage skin (24) that has an increased thickness and that extends radially inwardly from the interior surface of the composite fuselage skin (24).

2. The fuselage structure as claimed in claim 1, wherein the composite fuselage skin (24) is closed in its circumferential direction.

3. The fuselage structure as claimed in claim 1 or claim 2, wherein the plurality of frames (28) are part of a stringer-less frame subassembly (26).

4. The fuselage structure as claimed in any preceding claim, wherein the stringer-less fuselage structure (22) is an aft fuselage section (12A) of an aircraft (10).

5. The fuselage structure as claimed in any preceding claim, comprising an aircraft engine mount (34) extending through the composite fuselage skin (24) and fastened to one or more of the frames (28).

6. The fuselage structure as claimed in any preceding claim, wherein the frames (28) are made of a metallic material.

7. The fuselage structure as claimed in any preceding claim, wherein a thickness of the composite fuselage skin (24) at one of the tear straps (32) is at least 10% greater than a thickness of the composite fuselage skin (24) between two of the tear straps (32).

8. The fuselage structure as claimed in any preceding claim, wherein one or more of the frames (28) comprise one or more recesses to accommodate the increased thickness of one or more of the tear straps (32).

9. An aircraft comprising the stringer-less fuselage structure (22) as claimed in any preceding claim.

10. A method for manufacturing a stringer-less fuselage structure (22) comprising a composite fuselage skin (24) including a plurality of longitudinal tear straps (32) formed therein and a plurality of frames (28) configured to support an interior of the composite fuselage skin(24), the method comprising:
assembling the composite fuselage skin (24) comprising the longitudinal tear straps (32) together with a preassembled stringer-less subassembly (26) of the plurality of frames (28), each tear strap (32) comprising a region of the composite fuselage skin (24) having an increased thickness and extending radially inwardly from an interior surface of the fuselage skin (24); and
fastening the composite fuselage skin (24) and the stringer-less subassembly (26) of frames (28) together so that the plurality of frames support the interior surface of the composite fuselage skin(24).

11. The method as claimed in claim 10, wherein the composite fuselage skin (24) is closed in the circumferential direction and the assembling comprises inserting the stringer-less subassembly (26) of frames (28) into the composite fuselage skin (24).

12. The method as claimed in claim 10, wherein the composite fuselage skin (24) is closed in the circumferential direction and the assembling comprises placing the composite fuselage skin (24) over the stringer-less subassembly (26) of frames (28).

13. The method as claimed in any one of claims 10 to 12, wherein the stringer-less fuselage structure (22) is an aft fuselage section (12A) of an aircraft (10).

14. The method as claimed in any one of claims 10 to 13, comprising fastening an aircraft engine mount (34) extending through the composite fuselage skin (24) to one or more of the frames (28).

15. The apparatus as claimed in any one of claims 1-9 or the method as claimed in any one of claims 10 to 14, wherein the composite fuselage skin (24):
has a non-cylindrical shape; and/or
is tapered along its longitudinal axis (L); and/or
has a conical shape.

## Patentansprüche

1. Holmlose Rumpfstruktur (22), umfassend:
Eine Rumpfhaut (24) aus Verbundwerkstoff, die eine Vielzahl von Rissbändern (32) einschließt, die in der Rumpfhaut aus Verbundwerkstoff geformt sind, wobei sich jedes Rissband (32) generell entlang einer Längsachse (L) der Rumpfhaut (24) aus Verbundwerkstoff erstreckt; und
eine Vielzahl von Rahmen (28), die eine Innenraumoberfläche der Rumpfhaut (24) aus Verbundwerkstoff stützen, wobei die Rahmen (28) entlang der Längsachse (L) der Rumpfhaut aus Verbundwerkstoff beabstandet sind;
**dadurch gekennzeichnet, dass** jedes Rissband (32) einen Bereich der Rumpfhaut (24) aus Verbundwerkstoff umfasst, der eine erhöhte Dicke aufweist und der sich radial nach innen von der Innenraumoberfläche der Rumpfhaut (24) aus Verbundwerkstoff erstreckt.

2. Rumpfstruktur wie in Anspruch 1 beansprucht, wobei die Rumpfhaut (24) aus Verbundwerkstoff in Umfangsrichtung geschlossen ist.

3. Rumpfstruktur wie in Anspruch 1 oder Anspruch 2 beansprucht, wobei die Vielzahl von Rahmen (28) Teil einer holmlosen Rahmenunterbaugruppe (26) ist.

4. Rumpfstruktur wie in einem vorhergehenden Anspruch beansprucht, wobei die holmlose Rumpfstruktur (22) ein Rumpfhinterteil (12A) eines Flugzeugs (10) ist.

5. Rumpfstruktur wie in einem vorhergehenden Anspruch beansprucht, die eine Flugzeug-Triebwerksaufhängung (34) umfasst, die sich durch die Rumpfhaut (24) aus Verbundwerkstoff erstreckt und an einem oder mehreren der Rahmen (28) befestigt ist.

6. Rumpfstruktur wie in einem vorhergehenden Anspruch beansprucht, wobei die Rahmen (28) aus einem Metallwerkstoff hergestellt sind.

7. Rumpfstruktur wie in einem vorhergehenden Anspruch beansprucht, wobei eine Dicke der Rumpfhaut (24) aus Verbundwerkstoff an einem der Rissbänder (32) zumindest 10% größer als die Dicke der Rumpfhaut (24) aus Verbundwerkstoff zwischen zwei der Rissbänder (32) ist.

8. Rumpfstruktur wie in einem vorhergehenden Anspruch beansprucht, wobei ein oder mehrere der Rahmen (28) eine oder mehrere Vertiefungen zur Aufnahme des einen oder mehrerer Rissbänder (32) erhöhter Dicke umfassen.

9. Flugzeug, das die holmlose Rumpfstruktur (22), wie in einem vorhergehenden Ansprüche beansprucht, umfasst.

10. Verfahren zur Herstellung einer holmlosen Rumpfstruktur (22), die eine Rumpfhaut (24) aus Verbundwerkstoff umfasst, die eine Vielzahl von longitudinalen darin geformten Rissbändern (32) und eine Vielzahl von Rahmen (28) einschließt, die ausgelegt sind, einen Innenraum der Rumpfhaut (24) aus Verbundwerkstoff zu stützen, wobei das Verfahren umfasst:
Zusammenbauen der Rumpfhaut (24) aus Verbundwerkstoff, welche die longitudinalen Rissbänder (32) umfasst, mit einer vormontierten holmlosen Unterbaugruppe (26) der Vielzahl von Rahmen (28), wobei jedes Rissband (32) einen Bereich der Rumpfhaut (24) aus Verbundwerkstoff umfasst, der eine erhöhte Dicke aufweist und sich radial nach innen von einer Innenraumoberfläche der Rumpfhaut (24) erstreckt; und
Verbinden der Rumpfhaut (24) aus Verbundwerkstoff und der holmlosen Unterbaugruppe (26) von Rahmen (28) miteinander, sodass die Vielzahl von Rahmen die Innenraumoberfläche der Rumpfhaut (24) aus Verbundwerkstoff stützt.

11. Verfahren wie in Anspruch 10 beansprucht, wobei die Rumpfhaut (24) aus Verbundwerkstoff in Umfangsrichtung geschlossen ist und der Zusammenbau das Einschieben der holmlosen Unterbaugruppe (26) von Rahmen (28) in die Rumpfhaut (24) aus Verbundwerkstoff umfasst.

12. Verfahren wie in Anspruch 10 beansprucht, wobei die Rumpfhaut (24) aus Verbundwerkstoff in Umfangsrichtung geschlossen ist und der Zusammenbau das Platzieren der Rumpfhaut (24) aus Verbundwerkstoff über die holmlose Unterbaugruppe (26) von Rahmen (28) umfasst.

13. Verfahren wie in einem der Ansprüche 10 bis 12 beansprucht, wobei die holmlose Rumpfstruktur (22) ein Rumpfhinterteil (12A) eines Flugzeugs (10) ist.

14. Verfahren wie in einem der Ansprüche 10 bis 13 beansprucht, welches das Befestigen einer Flugzeug-Triebwerksaufhängung (34), die sich durch die Rumpfhaut (24) aus Verbundwerkstoff erstreckt, an einen oder mehrere der Rahmen (28) umfasst.

15. Vorrichtung wie in einem der Ansprüche 1-9 beansprucht oder dem Verfahren wie in einem der Ansprüche 10 bis 14 beansprucht, wobei die Rumpfhaut (24) aus Verbundwerkstoff:
eine nicht zylindrische Form aufweist; und/oder
entlang ihrer Längsachse (L) verjüngt ist; und/oder
eine konische Form aufweist.

## Revendications

1. Structure de fuselage sans lisse (22) comprenant :
une enveloppe de fuselage composite (24) comportant une pluralité de sangles de déchirure (32) formée dans l'enveloppe de fuselage composite, chaque sangle de déchirure (32) s'étendant généralement le long d'un axe longitudinal (L) de l'enveloppe de fuselage composite (24) ; et
une pluralité de cadres (28) soutenant une surface intérieure de l'enveloppe de fuselage composite (24), les cadres (28) étant espacés le long de l'axe longitudinal (L) de l'enveloppe de fuselage composite ;
**caractérisé en ce que** chaque sangle de déchirure (32) comprend une région de l'enveloppe de fuselage composite (24) qui présente une épaisseur augmentée et qui s'étend radialement vers l'intérieur depuis la surface intérieure de l'enveloppe de fuselage composite (24).

2. Structure de fuselage selon la revendication 1, dans laquelle l'enveloppe de fuselage composite (24) est fermée dans sa direction circonférentielle.

3. Structure de fuselage selon la revendication 1 ou la revendication 2, dans laquelle la pluralité de cadres (28) fait partie d'un sous-ensemble de cadres sans lisse (26).

4. Structure de fuselage selon n'importe quelle revendication précédente, dans laquelle la structure de fuselage sans lisse (22) est une section de fuselage arrière (12A) d'un aéronef (10).

5. Structure de fuselage selon n'importe quelle revendication précédente, comprenant un bâti-moteur d'aéronef (34) s'étendant à travers l'enveloppe de fuselage composite (24) et fixé à un ou plusieurs des cadres (28).

6. Structure de fuselage selon n'importe quelle revendication précédente, dans lequel les cadres (28) sont réalisés en un matériau métallique.

7. Structure de fuselage selon n'importe quelle revendication précédente, dans laquelle une épaisseur de l'enveloppe de fuselage composite (24) au niveau de l'une des sangles de déchirure (32) est au moins 10 % supérieure à une épaisseur de l'enveloppe de fuselage composite (24) entre deux des sangles de déchirure (32).

8. Structure de fuselage selon n'importe quelle revendication précédente, dans laquelle un ou plusieurs des cadres (28) comprend un ou plusieurs renfoncements pour recevoir l'épaisseur augmentée d'une ou de plusieurs des sangles de déchirure (32).

9. Aéronef comprenant la structure de fuselage sans lisse (22) selon n'importe quelle revendication précédente.

10. Procédé de fabrication d'une structure de fuselage sans lisse (22) comprenant une enveloppe de fuselage composite (24) dans laquelle est formée une pluralité de sangles de déchirure longitudinales (32) et comportant une pluralité de cadres (28) configurée pour soutenir un intérieur de l'enveloppe de fuselage composite (24), le procédé comprenant :
l'assemblage de l'enveloppe de fuselage composite (24) comprenant les sangles de déchirure longitudinales (32) avec un sous-ensemble sans lisse préassemblé (26) de la pluralité de cadres (28), chaque sangle de déchirure (32) comprenant une région de l'enveloppe de fuselage composite (24) présentant une épaisseur augmentée et s'étendant radialement vers l'intérieur depuis une surface intérieure de l'enveloppe de fuselage (24) ; et
la fixation de l'enveloppe de fuselage composite (24) et du sous-ensemble sans lisse (26) de cadres (28) l'un à l'autre de telle sorte que la pluralité de cadres soutienne la surface intérieure de l'enveloppe de fuselage composite (24).

11. Procédé selon la revendication 10, dans lequel l'enveloppe de fuselage composite (24) est fermée dans la direction circonférentielle et l'assemblage comprend l'insertion du sous-ensemble sans lisse (26) de cadres (28) dans l'enveloppe de fuselage composite (24).

12. Procédé selon la revendication 10, dans lequel l'enveloppe de fuselage composite (24) est fermée dans la direction circonférentielle et l'assemblage comprend la pose de l'enveloppe de fuselage composite (24) par-dessus le sous-ensemble sans lisse (26) de cadres (28).

13. Procédé selon l'une quelconque des revendications 10 à 12, dans lequel la structure de fuselage sans lisse (22) est une section de fuselage arrière (12A) d'un aéronef (10).

14. Procédé selon l'une quelconque des revendications 10 à 13, comprenant la fixation d'un bâti-moteur d'aéronef (34) s'étendant à travers l'enveloppe de fuselage composite (24) à un ou plusieurs des cadres (28).

15. Appareil selon l'une quelconque des revendications 1 à 9 ou procédé selon l'une quelconque des revendications 10 à 14, dans lequel l'enveloppe de fuselage composite (24) :
a une forme non cylindrique ; et/ou
est effilé le long de son axe longitudinal (L); et/ou
a une forme conique.
